# EUROPEAN PATENT APPLICATION

(11) **EP 2 336 028 A1**
(43) Date of publication of application: **22.06.2011**
(21) Application number: 09382288.0
(22) Date of filing: 18.12.2009
(51) Int. Cl.: B64D 39/00, B64D 47/08, H04N 13/00

(54) **Improved method and system for enhanced vision in aerial refueling operations**

(71) Applicant: EADS Construcciones Aeronauticas, S.A., 28022 Madrid (ES)
(72) Inventor: Adarve Lozano, Alberto, 28906, Getafe, Madrid (ES)
(74) Representative: Elzaburu Marquez, Alberto

(57) **Abstract**

System for providing an enhanced vision of an scenario from an observation place (10), particularly the refueling area of a receiving aircraft from a tanker aircraft during a refueling operation, comprising two high resolution cameras (4) for providing video signals of said scenario (92) for stereo monitoring and a three-dimensional monitoring system (31) for displaying three-dimensional images (17), image processing means (13) for performing a digital zoom of a selected zone (23) in the captured digital images (17) of the scenario (92) and means for displaying the zoomed images (25', 25") on said three-dimensional monitoring system (31) over or instead of the original digital images (17). The invention also refers to a method for providing an enhanced vision during a refueling operation including the viewing of three-dimensional zoomed images (25', 25") of a selected zone (23) of the refueling area (9).

## Description

### FIELD OF THE INVENTION

The invention relates to an improved system for providing enhanced vision of the refueling scenario in aerial refueling operations between a tanker and a receiver aircraft. The invention also relates to a improved method for operating such a system.

### BACKGROUND

For in-flight refueling operations, one usual method is based on the use of a boom device for interconnecting a tanker aircraft with a receiver aircraft or receptor in flight, which is basically a telescopic or extensible tube attached to the underside of the tanker aircraft by means of an articulation element, that provides fuel passage from the tanker aircraft to the receiver aircraft. At the tanker aircraft, the operator controls visually all steps and procedures for a safe refueling operation. From the tanker, the operator controls the boom movements and therefore manipulates the boom until it makes a physical connection with the receptacle of the approaching receptor aircraft. Once the refueling operation is finished in a certain session, the boom is hoisted up to its secured position in the tanker aircraft.

Another usual method for in-flight refueling operations is called probe and drogue. As the name implies, this refueling method employs a flexible hose that trails from the tanker aircraft. The drogue is a fitting resembling a windsock or shuttlecock, attached at its narrow end with a valve to the flexible hose. The drogue stabilizes the hose in flight and provides a funnel to aid insertion of the receiver aircraft probe into the hose. The hose connects to a drum unit and, when not in use, the hose/drogue is reeled completely into the cited drum unit in the tanker aircraft. The receiver has a probe, which is a rigid arm placed on the aircraft's nose or fuselage. This probe is often retracted when not in use, particularly on high speed aircraft. At the end of the probe is a valve that is closed until it mates with the drogue, after which it opens and allows fuel to pass from tanker to receiver. A so-called "broken probe" (actually a broken fuel valve, as described above) may happen if poor flying technique is used by the receiver pilot, or in turbulence.

The operations described above are very sensitive and must be effected in a very precise and accurate way because of security reasons. In early aerial refueling systems, the manipulation of the boom into the receiver aircraft was done with the naked eye. However, in later systems, the boomer was able to view the boom and the receiver aircraft by means of cameras positioned rearwards in the tanker aircraft. These systems had the disadvantage of not being very accurate, because the boomer had to work with adverse viewing conditions hampering the aerial refueling operations. Document EP 1480164 discloses a system and a method for providing digitally enhanced images of aerial refueling operations increasing the acuity of the viewing system by means of the transformation of the digital images obtained, so that the resulting images are enhanced. This system is not able to provide a permanent overview of the overall scenario of boom refueling, so that, when a problem arises, the situational information of said problem is not immediately recognized. Moreover, this system does not give a proper and accurate view of the refueling operation scene, that helps the boomer having less operational risks. Document US 2003/0209633 discloses a system and a method for determining varying distances between a boom nozzle and a receiving aircraft refueling receptacle, during refueling operations. The system and method of this document use passive visual images taken from at least one camera in order to determine the length and angle of the extended boom. The system also comprises a computer that continuously uses the camera images, analyzing them in order to continuously calculate the distance between the boom nozzle and the receiving aircraft refueling receptacle. However, the system described in US 2003/0209633 does not provide an overview of the refueling scenario, but only indications as to length and angle of the boom nozzle relative to the refueling receptacle in the receiving aircraft. Moreover, the system and method described in this document work in such a manner that the computer compares the receiving aircraft image to the wire-model images, so that a receiving aircraft type having a known refueling receptacle position is then selected. Thus, the problem with such a system is that, in case of an operational risk taking place, the response to such a risk is highly delayed.

Document US 5,530,650 discloses an enhanced visual guidance system to facilitate the mating of a refueling boom on a tanker aircraft with a boom receptacle on a receiving aircraft to enable in-flight refueling of the receiving aircraft. The system provides, on the one hand, enhanced image visual cues to facilitate the guidance of the boom in the previously-mentioned refueling operation and, on the other hand, a real time depiction of the desired structures and aircraft. This system is able to perform such operations by means of a locating means, a display terminal and a data processor. This system is not, however, able to provide a quick response in case of operational risk taking place.

A co-pending application of the same applicant discloses a method and system for enhanced vision in aerial refueling operations that provides the tanker aircraft monitoring station with a stereo monitoring of the refueling scenario in order to provide a three-dimensional vision of said scenario that solves many of the above-mentioned drawbacks but said method and system can still be improved because there are occasions during the refueling operation where it is interesting and convenient to view the refueling area a with higher degree of detail.

This invention is intended to attend to said particular demand and also to attend a similar demand for other three-dimensional vision methods and systems.

### SUMMARY OF THE INVENTION

It is an object of the present invention to provide three-dimensional vision systems of a given scenario allowing viewing parts of the scenario with higher degree of detail.

It is another object of the present invention to provide three-dimensional vision methods and systems to tanker aircrafts for monitoring refueling operations of receiver aircrafts allowing viewing selected parts of the refueling area with higher degree of detail.

In one aspect, these and other objects are met by providing a vision system of an scenario from an observation place, comprising at least two high resolution cameras for providing video signals of said scenario for stereo monitoring, at least a three-dimensional monitoring system for displaying three-dimensional images of said scenario, and also comprising means for viewing three-dimensional zoomed images of a selected zone of the scenario.

In a preferred embodiment, said means comprise image processing means for performing a digital zoom of the selected zone in the digital images of the scenario captured by said two high resolution cameras and means for displaying the zoomed images on said three-dimensional monitoring system over or instead of the original digital images. Hereby it is achieved a three-dimensional vision system having a zoom functionality.

In another preferred embodiment the digital zoom is performed at a predetermined zooming scale, not greater than 2x. Hereby it is achieved a three-dimensional vision system having a zoom functionality adapted to predetermined zoom needs.

In another preferred embodiment the digital zoom is performed at variable zooming scale, not greater than 2x. Hereby it is achieved a three-dimensional vision system having a zoom functionality suitable for different zoom needs.

In another preferred embodiment, said observation place is a tanker aircraft and said scenario is the refueling area of a receiving aircraft. Hereby it is achieved a three-dimensional vision system for monitoring a refueling operation having a zoom functionality.

In another preferred embodiment, the system also comprises an actuator for activating/deactivating the viewing of said three-dimensional zoomed images of a selected zone of the refueling area. Hereby it is achieved a three-dimensional vision system for monitoring a refueling operation having an easily handled zoom functionality.

In another preferred embodiment, said actuator is a button located in a joystick used for piloting the refueling means. Hereby it is achieved a three-dimensional vision system for monitoring a refueling operation having a zoom functionality which is handled with the same means used for handling the refueling operation.

In another aspect, the above-mentioned objects are met by a method providing an enhanced vision of the refueling area of a receiving aircraft in aerial refueling boom operations from a tanker aircraft comprising the step of displaying three-dimensional images of said refueling area in a three-dimensional monitor located in the tanker aircraft for monitoring said refueling operations, said three-dimensional images resulting from a stereoscopic projection of digital images of said refueling area obtained by at least two high resolution cameras and also an optional step of viewing three-dimensional zoomed images of a selected zone of the refueling area, totally or partially superimposed to the original three-dimensional images.

In a preferred embodiment, said optional step can be executed/cancelled very quickly. Hereby it is achieved a three-dimensional vision method for monitoring a refueling operation having an zoom functionality adapted to the needs of the refueling operation.

Other features and advantages of the present invention will be understood from the following detailed description in relation with the enclosed drawings.

### BRIEF DESCRIPTION OF DRAWINGS

Figures 1, 2 and 3 are schematic views of the scenario of a refueling operation and of some of the means of a full enhanced vision system disclosed in a co-pending application.
Figure 4 is a schematic view of the main components of the improved enhanced vision system according to the present invention.
Figures 5a and 5b show schematically two zoomed images of two different zones of the scenario.

### DETAILED DESCRIPTION OF PREFERRED EMBODIMENTS

A preferred embodiment of this invention will described in connection with a refueling operation.

The above-mentioned co-pending application discloses a full enhanced vision system for the refueling scenario in aerial refueling operations between a tanker aircraft 10 having refueling means and a receiver aircraft. For a better understanding of the present invention, the more relevant paragraphs of said co-pending application for the present invention (with little editorial changes) follows.

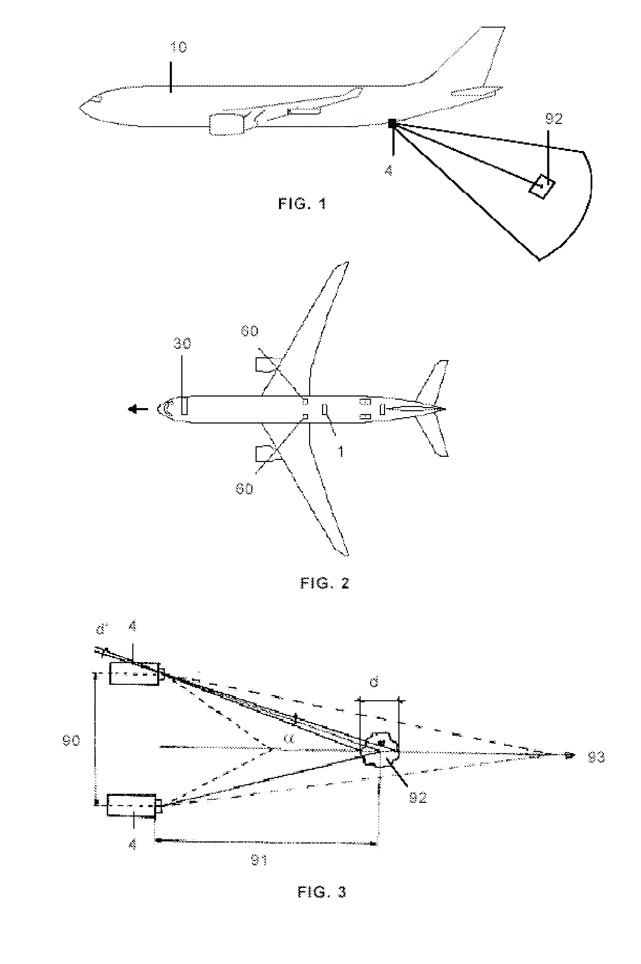

Said full enhanced vision system comprises, as shown in Figures 1-3, vision means 1, located in the tanker aircraft 10, preferably in the lower part of the fuselage of said tanker aircraft 10, that provide both images for stereo monitoring of the refuelling scenario and panoramic images with a permanent overview of the surroundings of the tanker aircraft 10 for situational awareness. The vision means 1 comprises at least two panoramic cameras and at least two cameras 4.

To create depth perception and three-dimensional vision or three-dimensional effect, a traditional method is based on providing two different images to the viewer, representing two different perspectives of the same object.

To achieve this, usually two cameras are placed directed for observation of a point or area, called centre of convergence, the cameras being spatially separated a distance from each other. Each of the images is seen by one eye of the viewer or operator, i.e. the image form the left camera is seen by the left eye and the image from the right camera is seen by the right eye, by means of different methods, such as: use of linearly polarized glasses and combining images from two monitors polarized in different directions; side by side viewing using head-mounted displays or other traditional methods; methods alternating left and right images with a time frequency (wiggle stereoscopy); displays with filter arrays or with two or more layers; use of prismatic and self masking cross-view glasses; and others. The discrepancy of the images of the objects taken from the cameras located at different positions gives the viewer, the air-refuelling operator in this particular case, information of the position of such objects. The higher is the distance between the cameras, the bigger are the differences between both images, allowing the human brain to better discriminate the distances at which objects are placed. But also, the bigger are the differences between both images, the more difficult and uncomfortable is for the brain to integrate both signals in one three-dimensional image and obtain this depth information. There is an optimal distance for locating the cameras which depends on many factors such as how far away is the convergence point, and the viewer capacity to integrate the images, as double image usually appears from a certain level of discrepancy of the images.

If the two different images are only slightly different from each other (due for example to a low separation between the cameras, or because there is too much distance of the convergence point), the resolution of the vision system (due to resolution of any part of the chain such as the camera, the displays or the human eyes) may not be enough to provide proper depth and/or three-dimensional information to the viewer.

Furthermore, if the two different images provided to the viewer are much too different one from another, eyestrain, double image and/or distortion will occur.

As it can be seen in Figure 3, where the following distances are defined:
90: separation of the cameras 4 at the vision means 1 of the system;
91: average distance between the cameras 4 and the refuelling area 92, in the direction of observation 93;
d: average size of the refuelling area 92 of interest for the operation, in the direction of observation 93, or maximum distance between objects within the refuelling area 92, in the direction of observation 93;
the cameras 4 provide the viewer (i.e., the boomer) with two different perspectives of objects in the refuelling area 92, these perspectives creating depth perception and three-dimensional vision of such objects.

For given values of 90 and d, the higher the distance 91 is, the lower the angle α between the lines of view of the objects in the refuelling area 92 from the cameras 4 is, and the lower the magnitude d' at the image plane perceived by the sensing devices of the cameras 4 is. This situation results in a poor perception of the distance d of the refuelling area 92, as there exists a very low disparity between the two different perspectives obtained from the cameras 4.

However, the lower the distance 91 is, the higher the mentioned angle α is, and the higher the magnitude d' at the image plane perceived by the sensing devices of the cameras 4 is. However, if the distance 91 is too low, this situation results in the appearance of eyestrain, double image and/or distortion for the operator or boomer, as the two perspectives obtained from the cameras 4 are very different from each other.

The solution described by the system of the invention is to adapt the separation 90 of the cameras 4 taking into account the distance 91 of said cameras 4 to the refuelling area 92, and also the average distance d in the direction of view 93 at the refuelling area 92 for observation. In this way, optimum depth perception of this particular area of interest would be achieved, however assuming that eyestrain, double image and/or distortion will occur when observation is made of objects in areas 92 at lower distances than 91 from the cameras.

For the diverse type of refuelling means presently used, the resulting separation 90 between the cameras 4 at the vision means 1 are in the range of 300 to 1200 mm, considerably different and away from the range of the human inter-pupils distance of 50-75 mm. More in particular, a range of 500 to 700 mm is useful for particular types of in-flight refuelling operations.

The vision means 1 also comprise a laser pointer (not shown) for effecting the alignment of said cameras 4.

The vision means 1 comprises at least two cameras 4, one left and one right. The left and right references are taken with respect to the left and right wings, respectively, as to the forward flight direction of the tanker aircraft 10. The main function of the cameras 4 is to provide video signal to the monitoring means 30 to generate a three-dimensional image of the refuelling scenario. The cameras 4 are able to correctly operate in low light conditions and under infrared illumination.

The field of view of the cameras 4 is 32° in the horizontal field and 18° in the vertical field. Each camera 4 comprises a heating element (not shown) to start heating the cameras 4 at temperatures lower than 10°C, and to stop the heating at temperatures higher than 20°C.

The system also comprises monitoring means 30, comprising stereo monitoring means 31 for displaying images taken from the cameras 4 and panoramic monitoring means for displaying images taken from the panoramic cameras.

The stereo monitoring means 31 are installed in consoles of the monitoring means, one for the Air Refuelling Operator (ARO) and the other one for the Mission Coordinator (MC). These two crewmembers are provided with images of the refuelling operations. The images coming from the two cameras 4 are sent to four TFT monitors, two for the ARO and two for the MC, generating a three-dimensional effect.

The main use of the stereo monitoring means 31 is to display the images of the cameras 4 and present them to the operator getting a three-dimensional composition.

The system according to a preferred embodiment of this invention relates to an improvement of said vision system and the main components involved are the cameras 4 and the stereo monitoring means 31.

The cameras 4 provide video signal to generate digital images of the refueling area 92. They are high resolution cameras 4 incorporating two CCD progressive scanning sensors (black and white and color) of 1920x1080 pixel resolution with appropriate lenses to ensure day (with color images) and night operation (sensitive to infrared illumination).

The images coming form the two high resolution cameras 4 are sent to the stereo monitoring means 31, hereinafter the three-dimensional monitoring system 31 with means for generating the three-dimensional effect (in particular, two TFT units).

The system according to a preferred embodiment of this invention also comprises means for viewing three-dimensional zoomed images of a selected zone of the refueling area 92.

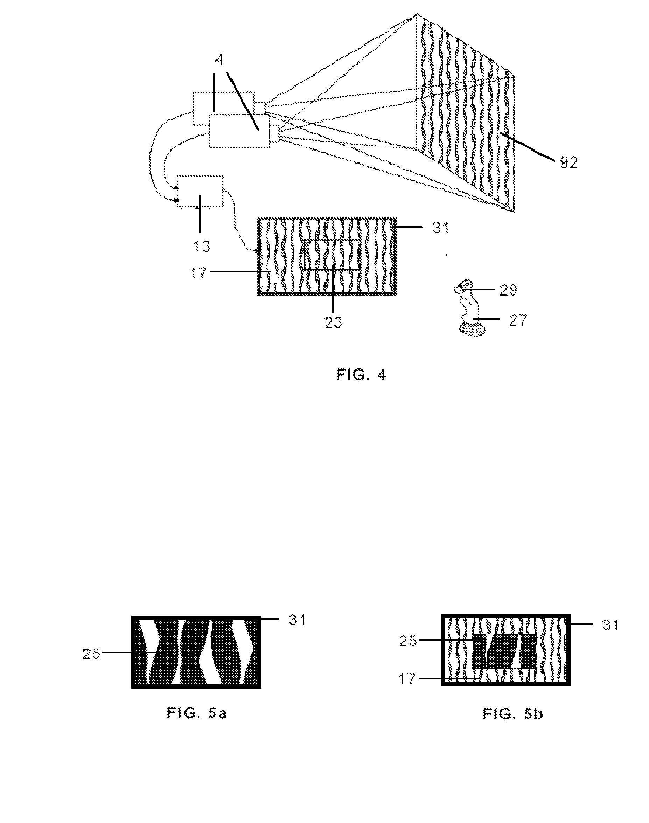

Following Fig. 4 it can be seen that the high resolution cameras 4 get pairs of digital images of the refueling area 92 that are displayed in the three-dimensional monitoring system 31 as a three-dimensional image 17 from the point of view of an operator in charge of the refueling operation.

If said operator is interested in obtaining zoomed images of a particular zone of the refueling area 92, he proceeds to its identification through the selection of a window 23 covering said zone in the three-dimensional monitoring system 31 and to demand its display pressing the button 29 of the joystick 27 used to control the refueling means.

Then the digital images provided by the high resolution cameras 4 are subject of a processing in a module 13 to generate digitally zoomed images of the selected zone 23 to be displayed in the three-dimensional monitoring system 31 over the original images of the refueling area 92.

It should be pointed out that digital zoom is different than optical zoom performed through lenses and consequently said zoomed images are enlarged images of the selected zone without modifying the image resolution.

As illustrated respectively in Figures 5a and 5b, the zoomed images 25', 25" may be displayed, depending on its size, in the whole screen of the three-dimensional monitoring system 31 or around the selected zone 23.

The module 13 comprises known electronic and software means to perform the requested digital zoom of the selected window in the original pairs of digital images provided by the high resolution cameras 4 at a predetermined zooming scale or at zooming scale to be chosen by the operator.

In a preferred embodiment of this invention, the maximum zooming scale is 2x to guarantee the three-dimensional vision for the zoomed images.

The improved refueling method according to a preferred embodiment of this invention includes as an optional step during the refueling operation the viewing of three-dimensional zoomed images of a selected zone of the refueling area, because there are instants during the operation at which it is interesting and convenient to see part of the image of the refueling area with higher degree of detail.

Said optional step shall be easily activated/deactivated by the operator to allow him the access to enlarged images of selected parts of the refueling area according to the needs arising during the refueling operation, so that the execution/cancellation of said step can be done very quickly, particularly in less than 3/60 s and preferably in less than 1/60 s (for a 60 frames/s mode).

Although the present invention has been fully described in connection with preferred embodiments, it is evident that modifications may be introduced within the scope thereof, not considering this as limited by these embodiments, but by the contents of the following claims.

## Claims

1. System for providing an enhanced vision of an scenario (92) from an observation place (10), comprising at least two high resolution cameras (4) for providing video signals of said scenario (92) for stereo monitoring and at least a three-dimensional monitoring system (31) for displaying three-dimensional images (17) of said scenario (92), **characterized in that** it also comprises means for viewing three-dimensional zoomed images (25', 25") of a selected zone (23) of the scenario (92).

2. System according to claim 1, **characterized in that** said means comprise image processing means (13) for performing a digital zoom of the selected zone (23) in the digital images (17) of the scenario (92) captured by said two high resolution cameras (4) and means for displaying the zoomed images (25', 25") on said three-dimensional monitoring system (31) over or instead of the original digital images (17).

3. System according to claim 2 **characterized in that** said processing means (13) are adapted to perform said digital zoom at a predetermined zooming scale.

4. System according to claim 2 **characterized in that** said processing means (13) are adapted to perform said digital zoom at a variable zooming scale.

5. System according to any of claims 3-4, **characterized in that** the maximum zooming scale is 2x.

6. System according to any of claims 1-5, **characterized in that** said observation place (10) is a tanker aircraft and said scenario (92) is the refueling area (92) of a receiving aircraft.

7. System according to claim 6, **characterized in that** said high resolution cameras (4) are arranged for providing suitable digital images of the refueling area (92) displaying three-dimensional images (17) of said refueling area (92) with reduced eyestrain and reduced distortion.

8. System according to any of claims 6-7, **characterized in that** it also comprises an actuator for activating/deactivating the viewing of said three-dimensional zoomed images (25, 25') of a selected zone (23) of the refueling area (92).

9. System according to claim 8, **characterized in that** said actuator is a button (29) located in a joystick (27) used for piloting the refueling means.

10. Aircraft comprising a system according to any of claims 6-9.

11. Method for providing an enhanced vision of the refueling area (92) of a receiving aircraft in aerial refueling boom operations from a tanker aircraft (10) comprising the step of displaying three-dimensional images (17) of said refueling area (92) in a three-dimensional monitoring system (31) located in the tanker aircraft (10) for monitoring said refueling operations, said three-dimensional images (17) resulting from a stereoscopic projection of digital images of said refueling area (92) obtained by at least two high resolution cameras (4), **characterized in that** it also comprises an optional step of viewing three-dimensional zoomed images (25', 25") of a selected zone (23) of the refueling area (92), totally or partially superimposed to the original three-dimensional images (17).

12. Method according to claim 11, **characterized in that** in the execution of said optional step said zoomed images (25', 25") are obtained at a predetermined zooming scale, not greater than 2x.

13. Method according to claim 11, **characterized in that** the execution of said optional step includes the selection of the zooming scale to be used for obtaining said zoomed images (25', 25"), not greater than 2x.

14. Method according to any of claims 11-13, **characterized in that** said zoomed images are viewed at 60 frames/s and said optional step can be executed/cancelled in a time lesser than 3/60 s.

15. Method according to claim 14, **characterized in that** said optional step can be executed/cancelled in a time lesser than 1/60 s.
